# EUROPÄISCHE PATENTSCHRIFT

(11) **EP 0 530 492 B1**
(45) Veröffentlichungstag und Bekanntmachung des Hinweises auf die Patenterteilung: **20.03.1996**
(21) Anmeldenummer: 92112833.6
(22) Anmeldetag: 28.07.1992
(51) Int. Cl.: D04B 35/20, G01N 21/89

(54) **Verfahren zum Feststellen von Fehlern in einer textilen Warenbahn**
Method for detecting flaws in a textile web
Procédé pour la détection de défauts d'un produit textile en bande

(30) Priorität: 02.09.1991 DE 4129126
(43) Veröffentlichungstag der Anmeldung: 10.03.1993
(73) Patentinhaber: MEMMINGER-IRO GMBH, D-72277 Dornstetten (DE)
(72) Erfinder: Mühlberg, Karl-Heinz, W - 7295 Dornstetten (DE); Weber, Friedrich, W - 7272 Altensteig (DE)
(74) Vertreter: Rüger, Rudolf, Dr.-Ing.

(56) Entgegenhaltungen:
- DE-A- 2 644 502
- DE-A- 3 030 006
- DE-A- 3 133 428
- DE-A- 4 001 650
- US-A- 4 748 334
- WIRKEREI- UND STRICKEREI-TECHNIK Nr. 36, Juli 1966, Seiten 701 - 706 SVOBODA 'Möglichkeiten der Mehrkanal-Fehlererkennung bei Grossrundgestricken und Anwendung auf Grossrundstrickmaschinen.'

## Beschreibung

Die Erfindung betrifft ein Verfahren zum Feststellen von Fehlern in einer textilen Warenbahn, insbesondere in einer auf einer Rundstrick- oder -wirkmaschine hergestellten schlauchförmigen Maschenware, bei dem die Warenbahn in wenigstens einem streifenförmigen Bereich auf elektro-optischem Wege mit Abtastmitteln abgetastet wird, die für den Zustand der Warenbahn an mehreren, innerhalb des streifenförmigen Bereiches liegenden Abtaststellen kennzeichnende elektrische Abtastsignale abgeben, welche im Sinne der Erkennung von Fehlern in der Warenbahn derart ausgewertet werden, daß eine Unterscheidung zwischen verschiedenen formen- und/oder größenmäßig verschiedenen Fehlerarten getroffen wird, und daß für so festgestellte Fehlerarten getrennte Ausgangssignale zur Ansteuerung, insbesondere von Anzeige- und/oder Steuer- und/oder Schalteinrichtungen erzeugt werden, wobei während der Abtastung eine quer zu dem streifenförmigen Bereich gerichtete Relativbewegung vorbestimmter Geschwindigkeit zwischen der Warenbahn und den Abtastmitteln aufrechterhalten wird, bei der abzutastende Bereiche der Warenbahn vorzugsweise mehrfach abgetastet werden.

Beispielsweise bei Hochleistungsrundstrickmaschinen besteht das Bedürfnis, den während des Betriebes kontinuierlich abgezogenen Warenschlauch auf das Auftreten von Fehlern zu überwachen. Diese Fehler können sogenannte Punktfehler, d.h. "Löcher" sein, wie sie beispielsweise von einem Fadenbruch herrühren und sich quer zur Längserstreckung des Warenschlauches, vorzugsweise über mehrere Maschenstäbchen erstrecken. Es kann sich aber auch um sogenannte Längsfehler handeln, d.h. Fehler, die in der Längsrichtung des Warenschlauches über mehrere Maschenreihen hinweg verlaufen und typischerweise als Laufmaschen in Erscheinung treten. Bei nur gelegentlich, etwa bei der Verarbeitung von Garnen minderer Qualität, auftretenden Punktfehlern oder von Längsfehlern kürzerer Länge, lohnt es sich häufig nicht, die Maschine abzustellen. Es ist aber erwünscht, die Zahl der etwa pro Zeiteinheit oder im Warenballen aufgetretenen Fehler zu registrieren. Bilden sich aber in dem Warenschlauch auf einmal Laufmaschen aus, die sich über eine größere Länge erstrecken, so ist dies ein Zeichen dafür, daß ein Nadelbruch vorliegt, was bedeutet, daß die Maschine möglichst rasch stillgesetzt werden muß.

Für die laufende Überwachung einer textilen Warenbahn, insbesondere einer auf einer Rundstrick- oder -wirkmaschine hergestellten schlauchförmigen Maschenware sind eine Reihe von Textilbahnüberwachungseinrichtungen mit elektro-optischen Tastköpfen und nachgeschalteten Auswerteinheiten bekannt geworden. Diese Tastköpfe arbeiten mit Lichtquellen und Lichtempfängern in Gestalt von Fotozellen, die häufig reihenweise angeordnet sind und auf die beim Auftreten eines Warenfehlers erfolgende Änderung der Reflexionsverhältnisse der Ware ansprechen und entsprechende Signale abgeben. Diese Signale werden bei den verschiedenen bekannten Verfahren nach unterschiedlichen Kriterien ausgewertet. Überschreitet das Ergebnis der Auswertung einen vorbestimmten Grenzwert, so wird die Maschine abgeschaltet.

Viele der bisher bekannten Abtasteinrichtungen haben den Nachteil, daß sie zwar allgemein auf Punktfehler und Längsfehler ansprechen, aber keine verläßliche Fehlerunterscheidung nach der jeweiligen Fehlerart vornehmen können. Zur Vermeidung von überflüssigen Unterbrechungen des Strickvorganges ist es aber zweckmäßig, eine zugelassene Fehlerquote vorzugeben und ein Abschaltsignal für die Maschine erst nach Erreichen dieser Fehlerquote abzugeben.

Dabei kommt dem Erkennen von Längs fehlern in Form von Laufmaschen, Fallmaschen, Reißmaschen, d.h. Schäden, die bei jeder Maschinenumdrehung zu ständig wiederkehrenden Fehlermeldungen führen, eine größere Bedeutung zu. Wie bereits erwähnt, gehen Längsfehler größerer Länge immer auf einen Defekt einer Nadel an der Maschenbildungsstelle zurück, der unbedingt frühzeitig erhoben werden muß, um fehlerhafte Gestrickbahnen zu vermeiden.

Andererseits sollen aber Fehlabstellungen bei kurzzeitig im Gestrick auftretenden Fehlermerkmalen (z.B. Garndick- oder -dünnstellen, Schalenreste bei Baumwolle usw.) sicher vermieden werden, weil sie zu einer erheblichen Beeinträchtigung der Produktion der Strickmaschine führen und überhaupt eine Betriebsstörung darstellen. Als Beispiele für solche bekannten Einrichtungen und Verfahren zur Überwachung einer Textilbahn mit elektrooptischen Tastköpfen können eine Reihe von Druckschriften angeführt werden:

Aus der DE-OS 1 938 677 ist ein Laufmaschenwächter für Rundstrick- und -wirkmaschinen bekannt, der innerhalb des Gestrickschlauches angeordnet ist und der eine Strahlungsquelle sowie mindestens eine Fotodiode als Strahlungsempfänger aufweist, die in gleichmäßigem Abstand von der Schlauchware angeordnet sind und von denen die Fotodiode relativ zur Strahlungsquelle so angeordnet ist, daß sie keine direkte Strahlung der Strahlungsquelle empfangen kann. Als Strahlungsquelle werden dabei normale Lichtquellen oder im Infratrotbereich arbeitende Luminiszenzdioden vorgeschlagen. Wie die die von den Lichtempfängern abgegebenen Signale verwertende Steuerschaltung im einzelnen aufgebaut ist, ist nicht geoffenbart.

Bei einem aus der DE-PS 3 133 428 bekannten Verfahren zum Abtasten und Auswerten von Fehlern in Textilien, insbesondere in Maschenwaren, werden mehrere Geber verwendet, wobei die Signalauswertschaltung einen Mikrorechner umfaßt. Ein ebenfalls mit einem Mikroprozessor arbeitendes Textilbahnüberwachungsgerät nach der DE-PS 3 536 991 erlaubt eine automatische Einstellung seiner Empfindlichkeit auf den Reflexionsgrad der zu überwachenden Textilbahn, um damit die Sicherheit der Fehleranzeige zu verbessern. Als getaktete Lichtgeber werden mehrere, in einer Reihe angeordnete Infrarot-Leuchtdioden verwendet.

Bei einem aus der DE-OS 4 001 650 bekannten Verfahren zur Fehlerkontrolle einer textilen Warenbahn, insbesondere an Rundstrickmaschinen zum Aufspüren von Laufmaschen, Nadelstreifen, Nadelgassen und Löchern, sind Vorkehrungen getroffen, daß unabhängig von der Geschwindigkeit der Maschine vollautomatisch die Eichung der Fehlerkontrolleinrichtung erfolgt und die Abschaltung der Maschine erst bei einem wiederholt an der gleichen Stelle festgestellten Fehler ausgelöst wird. Die Zahl der für die Abschaltung erforderlichen Fehlerwiederholungen kann wahlweise eingestellt werden. Dabei werden aber, um unnötige Abschaltungen zu vermeiden, bewußt nur Fehler mit Laufmaschen-Charakter berücksichtigt. Der elektrooptische Sensor besteht aus Infrarot-Dioden und Fototransistoren, die in einer Reihe wechselseitig angeordnet sind.

Schließlich ist aus der DE-OS 2 644 502 eine Vorrichtung zum Feststellen von Löchern in einem Stück Stoff bzw. Gewebe bekannt geworden, von der die Erfindung ausgeht und die es erlaubt, eine Unterscheidung zwischen sich quer zur Bewegungsrichtung der Ware erstreckenden Löchern, d.h. Löchern von Laufmaschen-Charakter und relativ kleinen Löchern zu treffen. Zu diesem Zwecke werden elektro-optische Abtastmittel verwendet, die einen Schlitz aufweisen, der quer zur Bewegungsrichtung der Ware angeordnet ist und dem mehrere Fotozellen zugeordnet sind, deren Ausgangssignale miteinander verglichen werden. Eine Auswerteschaltung vergleicht das Ausgangssignal jeder Fotozelle mit dem Mittelwert der Ausgangssignale der restlichen Fotozelle und erkennt an einer symmetrischen oder unsymmetrischen Signalverteilung das Vorliegen eines Punkt- oder eines Längsfehlers. Dabei ist das Erkennen von Längsfehlern (Laufmaschen) und deren Unterscheidung von Löchern aber deshalb nicht sicher genug möglich, weil davon ausgegangen wird, daß die Längsfehler genau parallel zu der in senkrechter Reihe angeordneten Fotozellen liegen. Eine solche Bedingung läßt sich aber auf einer Rundstrickmaschine praktisch deshalb nicht erfüllen, weil der Warenschlauch, ausgehend von seiner zylindrischen Gestalt zum Aufwickeln auf dem Warenballen bekanntlich flachgelegt werden muß. Läuft aber eine nur leicht schräge Laufmasche an der Fotozellenreihe vorbei, so werden in dieser zeitlich nacheinander versetzte Einzelsignale erzeugt, mit dem Ergebnis, daß die Laufmasche falsch als kurz hintereinander auftretende Löcher interpretiert wird.

Aufgabe der Erfindung ist es, ausgehend von diesem Stand der Technik, eine sicherere Fehlerfeststellung bei eindeutiger Unterscheidung zwischen Punkt- und Längsfehlern, insbesondere im Warenschlauch einer Rundstrickmaschine, zu ermöglichen, wobei gleichzeitig Fehlabschaltungen weitgehend ausgeschaltet sind.

Zur Lösung dieser Aufgabe wird bei dem eingangs genannten Verfahren erfindungsgemäß derart vorgegangen, daß die für die einzelnen Abtaststellen kennzeichnenden Abtastsignale jeweils gruppenweise zu zumindest zwei Fehlersignalen zusammengefaßt werden, die getrennt weiterverarbeitet und ausgewertet werden, daß bei dieser Auswertung der Amplitudenwert, die Zeitdauer, das einzelne oder gemeinsame Auftreten von Fehlersignalen der einzelnen Gruppen gemessen bzw. festgestellt werden, und daß daraus eine Bewertung in der Weise vorgenommen wird, daß
a) der Fehler als Punktfehler erkannt wird, wenn bei wenigstens einem mit seinem Amplitudenwert von einem vorgegebenen ersten Amplituden-Schwellenwert abweichenden Fehlersignal, die zeitliche Signaldauer einen vorgegebenen ersten zeitlichen Schwellenwert und zumindest einen vorbestimmten längeren Zeitraum überschreitet, ohne daß meherere Fehlersignale innerhalb eines Meßzeitraumes gemeinsam auftreten,
b) der Fehler als Längsfehler erkannt wird, wenn bei wenigstens zwei mit ihren Amplitudenwerten von einem vorgegebenen zweiten Ampliten-Schwellenwert abweichenden Fehlersignalen die zeitliche Signaldauer einen vorgegebenen zweiten zeitlichen Schwellenwert um zumindest einen vorbestimmten kürzeren Zeitraum überschreitet und zumindest zwei Fehlersignale innerhalb eines Meßzeitraumes gemeinsam auftreten, und sonst
c) kein Fehler erkannt wird.

Dieses Verfahren bewirkt eine differenzierte mehrdimensionale Bewertung der Fehlersignale nach verschiedenen Kriterien, die insgesamt sicherstellen, daß eine einwandfreie Unterscheidung zwischen Punktfehler oder "Loch" und Längsfehler oder "Laufmasche" gegeben ist.

Der erste und der zweite Amplituden-Schwellenwert können gleich oder verschieden groß sein. Da beide Fehlerarten getrennt beurteilt werden, ist es in der Regel zweckmäßig, bei Längsfehlern mit einer höheren Empfindlichkeitsschwelle zu arbeiten als bei Punktfehlern,und zwar ohne daß deswegen mit unerwünschten Fehlabschaltungen zu rechnen wäre. Erfahrungsgemäß ergeben nämlich Punktfehler (Löcher) eine größere Fehlersignalamplitude, die es erlaubt, für die Erkennung dieser Fehler mit einer niedrigeren Empfindlichkeitsschwelle das Auslangen zu finden.

Durch die Einstellung von zumindest zwei verschiedenen Empfindlichkeitsschwellen können auch Grenzfehler, die auf Ungleichmäßigkeiten im Gestrick zurückzuführen sind, unterschieden werden.

Die Bewertung der zeitlichen Signaldauer der festgestellten Fehlersignale bei der Auswertung geht von der Erkenntnis aus, daß sich Punktfehler (Löcher) in der Regel über mehrere Maschenstäbchen erstrecken, d.h. "breiter" als Laufmaschen sind. Laufmaschen dagegen sind durchweg jeweils auf ein Maschenstäbchen beschränkt.

Durch Einstellung der entsprechenden Amplituden-Schwellenwerte und der zeitlichen Schwellenwerte für die Signaldauer werden kleinere Unregelmäßigkeiten und elektrische Störimpulse bei der Fehlererfassung ausgeschlossen.

Da das einzelne oder gemeinsame Auftreten von Fehlersignalen jeweils innerhalb eines vorgegebenen Meßzeitraumes (logischen Fensters) festgestellt wird, wird ein beispielsweise durch eine Schräglage einer Laufmasche bezüglich des streifenförmigen Abtastbereiches herrührender zeitlicher Versatz der von den einzelnen gruppenweise zusammengefaßten Abtastmitteln kommenden Abtastsignale nicht zu einer Fehlinterpretation "mehrere hintereinanderfolgende Löcher" anstelle von "Längsfehler" führen. In einer praktischen Ausgestaltung dieses Auswerteschrittes können die Fehlersignale jeweils einzeln zumindest über einen vorbestimmten Zeitraum zwischengespeichert und erst dann auf Gemeinsamkeit ihres Auftretens untersucht werden.

Gemeinsam mit den vorerwähnten Kriterien führt schließlich die Feststellung, ob für das Auftreten der Fehlersignale die UND-Bedingung oder die Antivalenz-Bedingung erfüllt ist, zu der sicheren Erkennung der jeweiligen Fehlerart. Grundsätzlich führt ein Fehlersignal nur dann zur Maschinenabstellung, wenn nach dessen Auswertung die der jeweiligen Fehlerart entsprechenden Kriterien erfüllt sind.

Die von den elektro-optischen Abtastmitteln gelieferten Abtastsignale können nicht nur zum Fehlererkennen, sondern auch zur Überwachung der optischen Abtastbedingungen der Ware ausgenutzt werden. So kann aus diesen Abtastsignalen ein gewichtetes Summensignals gebildet werden, um die elektro-optischen Abtastmittel in Abhängigkeit von diesem Summensignal auf konstante vorgegebene optische Abtastbedingungen selbsttätig einzuregeln. Diese Regelung wird vorzugsweise durch eine impulsförmige Steuerung des Sendestroms der Lichtquellen erzeugt, derart, daß die Lichtempfänger (Fototransistoren) ständig in einem für sie optimalen Arbeitsbereich arbeiten.

Außerdem kann dieses gewichtete Summensignal daraufhin überwacht werden, ob es innerhalb vorbestimmter Grenzwerte liegt, wobei bei Überschreiten eines dieser Grenzwerte ein Steuersignal abgegeben wird. Auf diese Weise läßt sich erkennen, ob Defekte im Bereiche der Abtastmittel (Tastkopf) vorliegen, beispielsweise Lampenausfall, Anbringungsfehler, starkes Fremdlicht, Regelungsausfall etc.

Weiterbildungen des neuen Verfahrens sind Gegenstand von Unteransprüchen.

In der Zeichnung ist als Ausführungsbeispiel eine nach erfindungsgemäßen Verfahren arbeitende Fehlerüberwachungseinrichtung für den Warenschlauch einer Rundstrickmaschine dargestellt. Es zeigen jeweils in schematischer Darstellung:
- Fig. 1: eine Rundstrickmaschine mit einer angebauten Fehlerüberwachungseinrichtung, in einer Prinzipdarstellung und in einer Seitenansicht,
- Fig. 2: den elektro-optischen Tastkopf der Fehlerüberwachungseinrichtung nach Fig. 1, im axialen Schnitt in einer Seitenansicht,
- Fig. 3: ein Blockschaltbild der elektrischen Schaltung des Tastkopfes nach Fig. 2,
- Fig. 4: ein Blockschaltbild der elektronischen Signalauswertschaltung der Fehlerüberwachungseinrichtung nach Fig. 1,
- Fig. 5: die bedienungsseitige Frontplatte des Steuergerätes der Fehlerüberwachungseinrichtung nach Fig. 1, in einer schematischen Darstellung und in einer Draufsicht sowie in einem anderen Maßstab und
- Fig. 6 bis 9: das Flußdiagramm für einen Programmablauf in dem Mikrocomputer der Signalauswerteschaltung der Fehlerüberwachungseinrichtung nach Fig. 4.

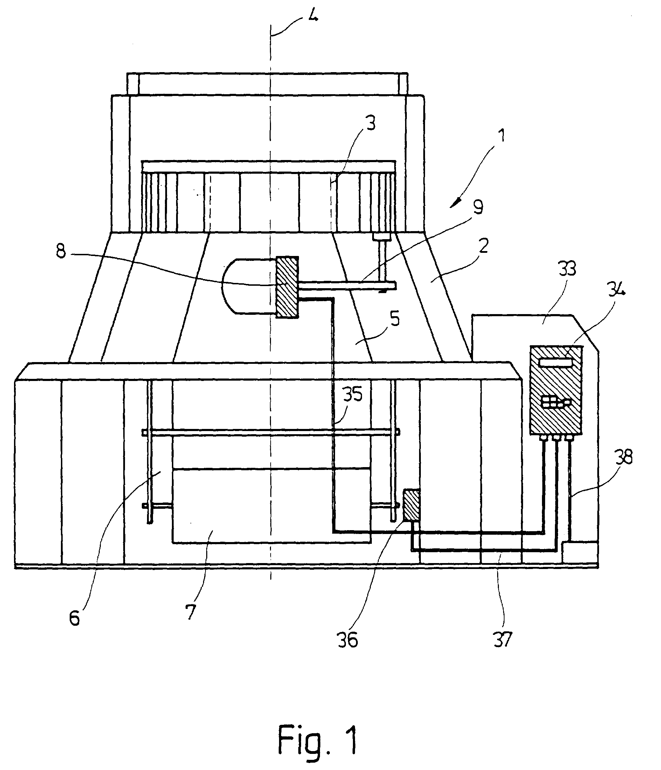

Die in Fig. 1 schematisch dargestellte Rundstrickmaschine 1 weist ein Maschinengestell 2 auf, in dem ein bei 3 angedeuteter Nadelzylinder um eine Vertikalachse 4 drehbar gelagert ist. Die mehrsystemige Rundstrickmaschine erzeugt einen um die Vertikalachse 4 umlaufenden Warenschlauch 5, der durch die angetriebene gebräuchliche Warenabzugsvorrichtung 6 abgezogen und fortlaufend flachliegend zu einem Warenballen 7 aufgewickelt wird.

Der umlaufende Waren- oder Gestrickschlauch 5 wird von einem unterhalb des Nadelzylinders 3 ortsfest angeordneten elektro-optischen Tastkopf 8 ständig auf Fehler überwacht. Der Tastkopf 8 kann je nach Maschinentype innerhalb oder außerhalb des Warenschlauches 5 angeordnet sein. Bei dem dargestellten Ausführungsbeispiel erfolgt die Abtastung des Warenschlauches 5 von außen her; der Tastkopf 5 ist deshalb über einen Halter 9 an dem Maschinengestell 2 derart befestigt, daß er gegenüber dem Gestrick des Warenschlauches 5 etwas federnd beweglich ist.

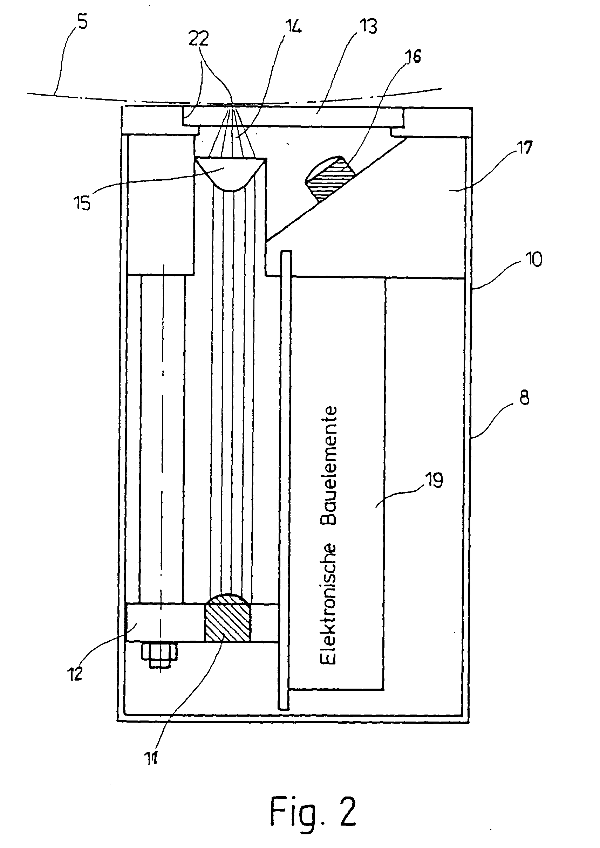

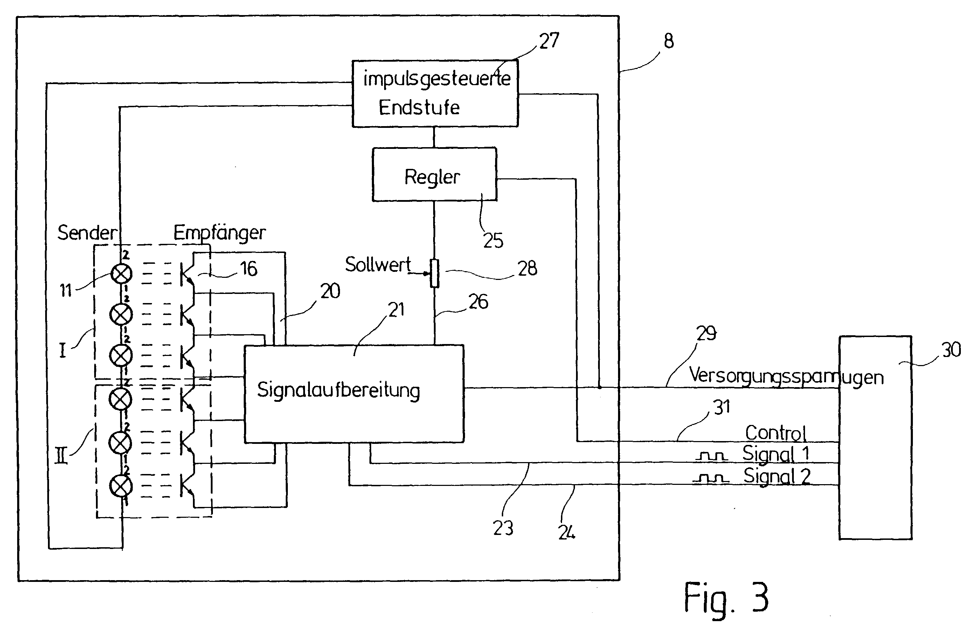

Wie in Fig. 2 schematisch dargestellt, weist der Tastkopf 8 ein etwa dosenförmiges Gehäuse 10 auf, in dem eine Anzahl (im vorliegenden Falle sechs) Lichtquellen 11 in einer sich senkrecht zur Papierebene erstreckenden Reihe auf einem zugeordneten Träger 12 angeordnet sind. Durch eine das Gehäuse 10 stirnseitig abschließende, streifenförmig seitlich begrenzte, lichtdurchlässige Scheibe 13 fällt das von den Lichtquellen 11 austretende und jeweils durch eine Sammellinse 15 gebündelte Licht auf das Gestrick der bei 5 angedeuteten Warenbahn. Das von dieser reflektierte Licht gelangt durch die lichtdurchlässige Scheibe 13 und eine Linse 15 zu (im vorliegenden Falle ebenfalls sechs) Lichtempfängern 16, die als Fototransistoren ausgebildet sind und in einer der Reihe der Lichtquellen 11 entsprechenden Reihe auf einem Tragelement 17 angeordnet sind, das über Stehbolzen 18 in dem Gehäuse 10 ortsfest gehaltert ist. In dem Gehäuse 10 des Tastkopfes 8 sind außerdem elektronische Bauelemente für die Aufbereitung der von den Lichtempfängern 16 abgegebenen Abtastsignale sowie zur automatischen Helligkeitsregelung der Lichtquellen 11 enthalten. Die zugeordnete Platine ist mit 19 bezeichnet. Ihr Schaltungsaufbau wird im folgenden anhand von Fig. 3 erläutert werden.

Das von den einzelnen Lichtsendern 11 ausgesandte gebündelte Licht wird von der abgetasteten textilen Oberfläche der Warenbahn 5 reflektiert und den Lichtempfängern 16 zugeleitet, die über Ausgangsleitungen 20 einer Signalaufbereitungsschaltung 21 elektrische Abtastsignale zuführen, die für den Zustand der reflektierenden textilen Warenbahn an der jeweiligen Abtaststelle kennzeichnend sind. Diese Abtaststellen liegen innerhalb eines durch die reihenweise Anordnung der Lichtquellen 11 und der Lichtempfänger 16 gegebenen streifenförmigen Bereich, der in Fig. 2 bei 22 angedeutet ist und der sich quer zu der Drehrichtung des Warenschlauches 5 erstreckt. Dieser streifenförmige Bereich ist deshalb etwa parallel zu der Vertikalachse 4 in Fig. 1 ausgerichtet. In ihm bildet jeder der in einer Reihe liegenden Lichtempfänger 16 eine diskrete Abtaststelle.

In der Signalaufbereitungsschaltung 21 sind die Signalausgänge der in einer Reihe angeordneten (in diesem Falle sechs) Lichtempfänger 16 in zwei Gruppen von jeweils drei Signalausgängen zusammengefaßt. Diese Gruppenbildung erfolgt beispielsweise in der Art, daß die drei benachbarten, in der Reihe oben liegenden Lichtempfänger 16 einer Gruppe I und die in der Reihe unten liegenden drei Lichtempfänger in eine zweite Gruppe II eingeteilt sind. Grundsätzlich ist es aber auch denkbar, die Gruppeneinteilung anders zu treffen, etwa derart, daß die Lichtempfänger 16 abwechselnd der Gruppe I und der Gruppe II zugeteilt werden, womit sich eine fortschreitende Abtastung der an dem Tastkopf vorbeilaufenden Warenbahn 5 erzielen läßt.

Die Zahl der Gruppen, in die die Lichtquellen 11 und die Lichtempfänger 16 zusammengefaßt sind, ist nicht auf zwei Gruppen beschränkt; sie kann, abhängig von den jeweiligen Abtastverhältnissen und den Einsatzbedingungen des Tastkopfes 8,auch größer gewählt werden.

Die Zusammenfassung der Signalausgänge der in einer Gruppe enthaltenden Lichtempfänger 16 erfolgt in der Signalaufbereitungsschaltung 21 in der Weise, daß von dieserimmer dann, wenn einer der Lichtempfänger 16 in einer der Gruppen, d.h. im vorliegenden Falle in der Gruppe I oder der Gruppe II anspricht und ein Abtastsignal liefert, auf einer der Gruppe I zugeordneten ersten Signalleitung 23 oder auf einer der Gruppe II zugeordneten zweiten Signalleitung 24 ein Fehlersignal abgegeben wird.

Um eine genaue Abtastung der textilen Warenbahn 5 zu gewährleisten, und von Abtastfehlern herrührende Fehlabschaltungen der Maschine zu vermeiden, müssen die optischen Abtastverhältnisse in dem Abtastbereich möglichst konstant gehalten werden. Es wird deshalb die textile Oberfläche in dem Abtastbereich von den Lichtquellen 11 mit einer definierten Helligkeit beleuchtet. Um Änderungen der Umgebungsverhältnisse (Raumbeleuchtung, Abschattung etc.) auszugleichen, ist eine automatische Helligkeitsregelung vorgesehen, die in dem Tastkopf 8 untergebracht ist.

Wie aus Fig. 3 zu ersehen, enthält der Tastkopf 8 einen Helligkeitsregler 25, dem von der Signalaufbereitungsschaltung 21 ein aus den Ausgangssignalen der Lichtempfänger 16 abgeleitetes gewichtetes Summensignal bei 26 zugeführt wird und der über eine impulsgesteuerte Endstufe 27 den Sendestrom der elektrisch hintereinandergeschalteten Lichtquellen 11 auf einen vorgegebenen Sollwert derart einregelt, daß die Lichtempfänger 16 (Fototransistoren) ständig in einem für sie optimalen Arbeitsbereich arbeiten. Dieser Bereich ist durch den vorgegebenen Sollwert bestimmt, der mit Hilfe eines bei 28 angedeuteten Sollwertgebers eingestellt werden kann und normalerweise unverändert bleibt. Die Regelung der Helligkeit der Lichtquellen 11 erfolgt in bekannter Weise über eine Pulsbreitenregelung in der Endstufe 27 des impulsförmigen Steuerstroms der Lichtquellen 11, dessen Frequenz ca. 20 bis 30 kHz beträgt.

Die Stromversorgung der Signalaufbereitungsschaltung 21 und der Lichtquellen 11 bzw. der impulsgesteuerten Endstufe 27 erfolgt über eine Stromversorgungsleitung 29, die gemeinsam mit den beiden Signalleitungen 23, 24 zu einem Steckverbinder 30 geführt ist.

Zu der Steckverbindung 30 führt außerdem noch eine Kontrolleitung 31 von dem Helligkeitsregler 25 über die eine Überwachung der von dem Helligkeitsregler 25 der impulsgesteuerten Endstufe 27 zugeleiteten Regelspannung erfolgt. Wenn diese Regelspannung nämlich vorgegebene Grenzwerte über- bzw. unterschreitet, ist das ein Zeichen dafür, daß in dem Tastkopf 8 selbst Fehler wie Lampenausfall, Anbringungsfehler, starkes Fremdlicht, Regelungsausfall etc. vorliegen, die einer sofortigen Abhilfe bedürfen. Diese im Tastkopf 8 liegenden Fehler werden somit ebenfalls über das in der Signalaufbereitungsschaltung 21 aus den Ausgangssignalen der Lichtempfänger 16 erzeugte. gewichtete Summensignal erkannt, das die Signalaufbereitungsschaltung 21 an den Helligkeitsregler 25 liefert.

An der Rundstrickmaschine 1 ist in der aus Fig. 1 ersichtlichen Weise etwa an dem Antriebsgehäuse 33 ein die Signalauswerteschaltung enthaltendes Steuergerät 34 für den Tastkopf 8 angeordnet, das mit diesem über ein die Leitungen 23, 24, 29, 31 (Fig. 3) enthaltendes Leitungsbündel 35 verbunden ist und an das eingangsseitig außerdem ein an dem Maschinengestell 2 angebrachter Taktgeber 36 angeschlossen ist, der über eine Leitung 37 das Steuergerät 34 mit Maschinentaktimpulsen versorgt. Mit 38 ist schließlich die Versorgungsspannungsleitung des Steuergerätes 34 bezeichnet.

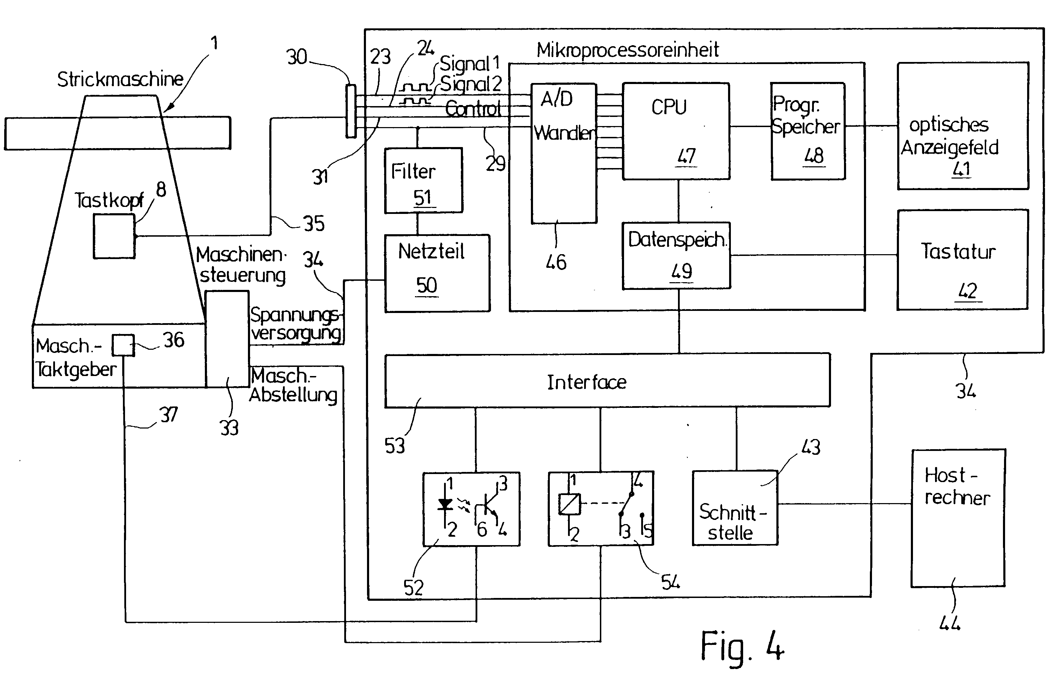

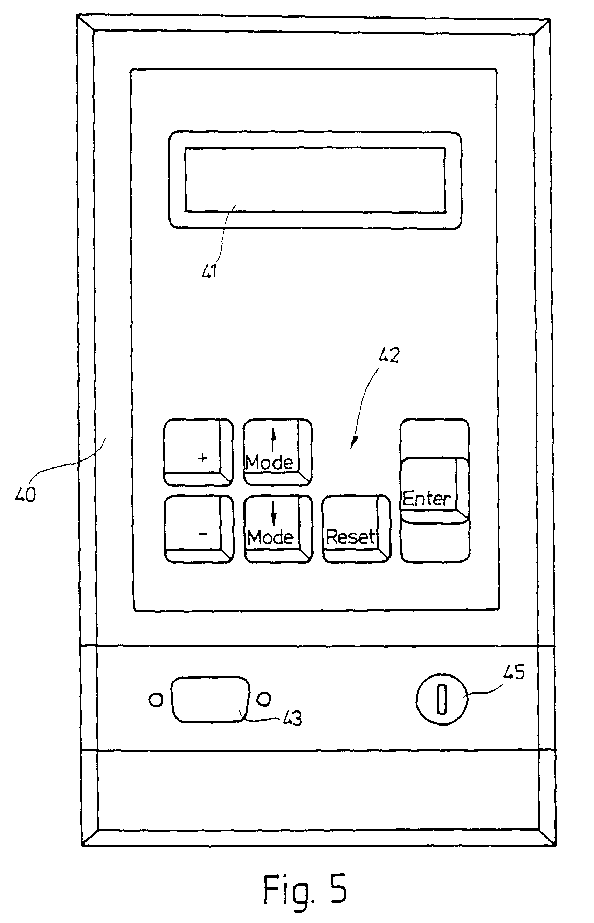

Das Steuergerät 34 enthält die Auswertungsschaltung für die von dem Tastkopf 8 gelieferten Fehlersignale, die im einzelnen anhand von Fig. 4 noch erläutert werden wird. Es ist außerdem mit den zur Bedienung der ganzen Fehlerüberwachungseinrichtung erforderlichen Elementen ausgerüstet. Dazu zählt, wie aus der Darstellung der Frontplatte 40 des Steuergerätes 34 in Fig. 5 zu ersehen, ein optisches Anzeigefeld 41 für die aktuellen Ablaufdaten und die Menüführung mit entsprechender Eingabetastatur 42. Eine V 24-Schnittstelle 43 dient zur Verbindung mit einem externen Datenerfassungsgerät und/oder einem übergeordneten Rechnersystem, wie es in Fig. 4 bei 44 angedeutet ist. Über diesen Weg kann auch eine Fernübertragung der Fehlerparameter erfolgen.

Das optische Anzeigefeld 41 ist in der Regel als zweizeiliges Display ausgebildet, auf dem die jeweiligen Fehlermeldungen und alle interessierenden Betriebszustände übersichtlich sichtbar gemacht werden können. Selbstverständlich sind auch andere Ausbildungen dieses Anzeigefeldes denkbar. Das Tastenfeld der Eingabetastatur 42 dient zur Eingabe oder zum Aufruf spezifischer Werte, die für den allgemeinen Betriebsablauf notwendig sind.

Ein schließlich im unteren Teil der Frontplatte noch vorgesehener Schlüsselschalter 45 dient zur Verhinderung eines unbefugten Zugriffes auf das Tastenfeld der Eingabetastatur 42.

Die in Fig. 4 dargestellte Fehlersignal-Auswertungsschaltung des Steuergerätes 34 setzt sich aus den Hauptgruppen Analog/Digital-Wandler 46, Mikroprozessor (CPU) 47, Programmspeicher 48 und Datenspeicher 49 zusammen. Außerdem enthält sie ein an die Spannungsversorgungsleitung 34 angeschlossenes Netzteil 50, das über ein entsprechendes Netzfilter 51 und die Leitung 29 die Spannungsversorgung des Tastkopfes 8 und der verschiedenen Elemente der elektronischen Fehlersignalauswertungsschaltung bewirkt.

Die von dem Tastkopf 8 über die Signalleitungen 23, 24 und die Kontrolleitung 31 kommenden analogen Fehlersignale bzw. das analoge Kontrollsignal werden dem Vier-Kanal-Analog-/Digitalwandler 46 zugeführt und in diesem prozessorspezifisch digitalisiert. Der nachgeschaltete Mikroprozessor 47 analysiert diese empfangenen digitalisierten Werte und legt die aus der Auswertung gewonnenen Daten - nach Fehlerart getrennt - in dem vorzugsweise nicht flüchtigen Datenspeicher 49 ab, über den auch die Dateneingabe durch die Eingabetastatur 42 erfolgt. Das optische Anzeigefeld 41 erhält seine Daten von dem von dem Mikroprozessor 47 entsprechend versorgten Programmspeicher 48.

Die für die Synchronisation des Verfahrensablaufes der Fehlersignalauswertung mit der Drehbewegung des Warenschlauches 5 erforderlichen, von dem als induktiver Näherungsinitiatior ausgebildeten Maschinentaktgeber 36 über die Leitung 37 zugeführten Synchronisationsimpulse werden über eine opto-elektrische Signalwandlerschaltung 52 einer Zwischenschaltung (Interface) 53 in dem Steuergerät 34 zugeführt, über die auch eine zur Abschaltung der Rundstrickmaschine im Fehlerfalle dienende Abschalt- Steuerschaltung 54 und die V24-Schnittstelle 43 an den Mikroprozessor 47 angeschlossen sind.

Die Auswertung der von dem A/D-Wandler 46 dem Mikroprozessor 47 zugeführten Daten erfolgt anhand eines Software-Programms, das im folgenden noch kurz erläutert werden wird. Dieses Software-Programm bewirkt eine Fehlerauswertung nach folgendem Prinzip:

Die über die Signalleitungen 23, 24 zugeführten Fehlersignale zeigen an, daß bei zumindest einem der Lichtempfänger 16 in der Gruppe I oder der Gruppe II oder bei zumindest zwei Lichtempfängern 16 in beiden Gruppen I und II eine Änderung der Reflexionsverhältnisse der abgetasteten textilen Oberfläche aufgetreten ist. Diese den einzelnen Gruppen (I, II) zugeordneten Fehlersignale geben Aufschluß nicht nur über das Auftreten eines Fehlers überhaupt, sondern auch über die Fehlerart-Dazu werden folgende Kriterien beurteilt:

a) Der Amplitudenwert des Fehlersignals: Es wird festgestellt, ob der Amplitudenwert über einem vorgegebenen Schwellenwert liegt oder nicht, wobei für verschiedene Fehlerarten, d.h. für Punkt- oder Längsfehler, unterschiedliche Schwellenwerte vorgegeben werden können. Liegt der Amplitudenwert unterhalb des niedrigsten Schwellenwertes, so liegt kein Fehler vor; das Fehlersignal bleibt unbeachtet.

b) Die Zeitdauer des Fehlersignals: Es wird festgestellt, ob die Signallänge (Dauer) einen bestimmten zeitlichen Schwellenwert überschreitet oder nicht. Dieser Schwellenwert kann für die verschiedenen Fehlerarten wiederum unterschiedlich gewählt werden. Liegt die Signaldauer unterhalb des tiefsten Schwellenwertes, so liegt ebenfalls kein Fehler vor; das Fehlersignal bleibt unbeachtet, weil zu vermuten steht, daß es nur auf eine kurzzeitige Störung (bspw. elektrischer Störimpuls oder Garndickstelle etc.) zurückzuführen ist.

Ausgehend von der Beobachtung, daß Längsfehler in der überwiegenden Mehrzahl schmäler sind als Punktfehler, weil bspw. Laufmaschen sich in der Regel auf die Breite eines Maschenstäbchens beschränken, während von einem gerissenen Faden herrührende Löcher die Breite mehrerer benachbarter Maschenstäbchen umfassen, gibt die Auswertung der Signaldauer bereits einen ersten Anhaltspunkt für die Unterscheidung zwischen den Fehlerarten. Wird nämlich der voreingestellte, zweckentsprechend gewählte zeitliche Schwellenwert um eine kürzere Zeitdauer überschritten, so deutet dies auf einen Punktfehler hin, während bei einer Überschreitung eines bestimmten (gegebenenfalls anderen) zeitlichen Schwellenwertes um eine längere Zeitdauer das Vorliegen eines Längsfehlers wahrscheinlich ist.

c) Gemeinsames Auftreten von Fehlersignalen (logisches Fenster): Treten die den Gruppen (I, II) zugeordneten Fehlersignale gemeinsam auf, so bedeutet dies, daß der abgetastete Bereich der textilen Warenoberfläche, in dem eine Änderung der Reflexionsverhältnisse festgestellt wird, sich über einen beide Gruppen I, II von Lichtempfängern 16 beeinträchtigenden Abschnitt erstreckt. Ist deshalb die logische UND-Bedingung für die beiden gruppenspezifischen Fehlersignale erfüllt, so liegt wahrscheinlich ein Längsfehler vor. Ergibt die Prüfung aber andererseits, daß die Antivalenzbedingung XOR erfüllt ist, so handelt es sich um einen Punktfehler.

Enthält der in dem streifenförmigen Abtastbereich 22 des Tastkopfes 8 abgetastete umlaufende Warenschlauch 5 eine Laufmasche, d.h. einen Längsfehler, so werden die davon beeinflußten Lichtempfänger 16 des Tastkopfes 8 in den Gruppen I, II nur dann gleichzeitig ein Fehlersignal abgeben, wenn die Laufmasche exakt parallel zu der Achse des streifenförmigen Abtastbereiches 22 ausgerichtet ist. Tatsächlich sind aber wegen des Warenabzugs und der dadurch bedingten Verformung des Warenschlauches beim Übergang von der zylindrischen in die plattgelegte flache Form bestimmte Verzerrungen der Maschenware prinzipbedingt unvermeidlich.

Mit anderen Worten, abhängig von dem Anbringungsort des Abtastkopfes 8, relativ zu dem Nadelzylinder, sind die Maschenstäbchen bezüglich der Achse des Abtastbereiches etwas schräg gelegt oder gekrümmt. Wenn nun das gleichzeitige Auftreten von Fehlersignalen in mehreren Gruppen als Hinweis auf das Vorliegen eines Längsfehlers gewertet wird, so wäre eine sichere Fehlererkennung nur unter der Voraussetzung gewährleistet, daß die Längsmaschen (bspw. Laufmaschen) exakt parallel zu der Achse des streifenförmigen Abtastbereichs, d.h. der Reihe der Lichtempfänger 16, in den Abtastbereich eintreten. Jede Schräglage beim Eintritt führt dazu, daß die Lichtempfänger 16 in den einzelnen Gruppen zeitlich gegeneinander versetzt ansprechen, mit der Folge, daß ohne besondere Vorkehrungen der Längsfehler fälschlicherweise als eine Folge von Punktfehlern interpretiert würde.

Um das zu verhindern und auch bei Maschenverzug, z.B. bei schrägverlaufenden Laufmaschen, eine eindeutige Fehlerarterkennung zu sichern, wird bei der Bewertung des logischen Fensters untersucht, ob aufeinanderfolgende Fehlersignale der beiden Gruppen innerhalb eines vorbestimmten Meßzeitraums auftreten, der dem für die jeweilige Fehlerart zu erwartenden maximalen Zeitversatz zwischen dem Auftreten der beiden Fehlersignale entspricht. Praktisch kann dies derart geschehen, daß beide Fehlersignale während eines vorbestimmten Zeitraums kurzzeitig getrennt gespeichert und erst anschließend auf die Gemeinsamkeit des Auftretens untersucht werden.

Treten sie innerhalb dieses Meßzeitraums gemeinsam auf, so handelt es sich wahrscheinlich um einen Längs fehler (UND-Bedingung erfüllt). Tritt nur ein Signal von beiden auf, liegt wahrscheinlich ein Punktfehler vor (XOR-Bedingung erfüllt).

d) Periodische Fehlerwiederholung: Die periodische Wiederkehr eines Fehlers wird für jede Maschinenumdrehung registriert, wobei wahlweise Vorkehrungen getroffen werden können, um die Maschine entweder bereits bei der ersten Fehlerwiederholung oder erst nach mehreren Umdrehungen, bei denen sich der Fehler wiederholt, abzuschalten.

Tritt eine Fehlerwiederholung in aufeinanderfolgenden Maschinenumdrehungen auf, so handelt es sich um einen Längsfehler. Ist keine solche Fehlerwiederholung festzustellen, so liegt in der Regel ein Punktfehler vor.

Die festgestellten Fehler werden nach Fehlerarten getrennt gespeichert und registriert sowie gegebenenfalls auf dem optischen Anzeigefeld 41 zur Anzeige gebracht. Dabei sind Zähler vorgesehen, die die Gesamtzahl der Fehler pro Warenballen (nach Fehlerarten getrennt oder gemeinsam), die Zahl der Fehler pro Zeiteinheit (ebenfalls nach Fehlerart getrennt oder gemeinsam) etc. angeben und deren aktueller Zählerstände von der Bedienungsperson über die Eingabetastatur 42 in das Anzeigefeld 41 abgerufen werden können. Außerdem werden, abhängig von der Zahl und der Art der erkannten Fehler, über das Interface 43, die Maschinenabstellung 54 und gegebenenfalls zusätzlich noch Alarmeinrichtungen angesteuert, wobei Vorsorge getroffen werden kann, daß beim Auslaufen der Maschine deren Nadelzylinder in einer Stellung zur Ruhe kommt, in der beispielsweise eine gebrochene Nadel einer Nadeltür gegenübersteht.

In dem Mikroprozessor 47 wird außerdem das über die Kontrolleitung 31 zugeführte Kontrollsignal daraufhin überprüft, ob die Regelspannung des Helligkeitsreglers 25 (Fig. 3) innerhalb der vorgegebenen Grenzwerte liegt oder nicht. Sowie einer der Grenzwerte überschritten wird und damit die optischen Abtastbedingungen unzulässig werden, wird über das Interface 43 die Maschinenabstellung 54 angesteuert oder auf dem optischen Anzeigefeld 41 ein Alarmsignal abgegeben.

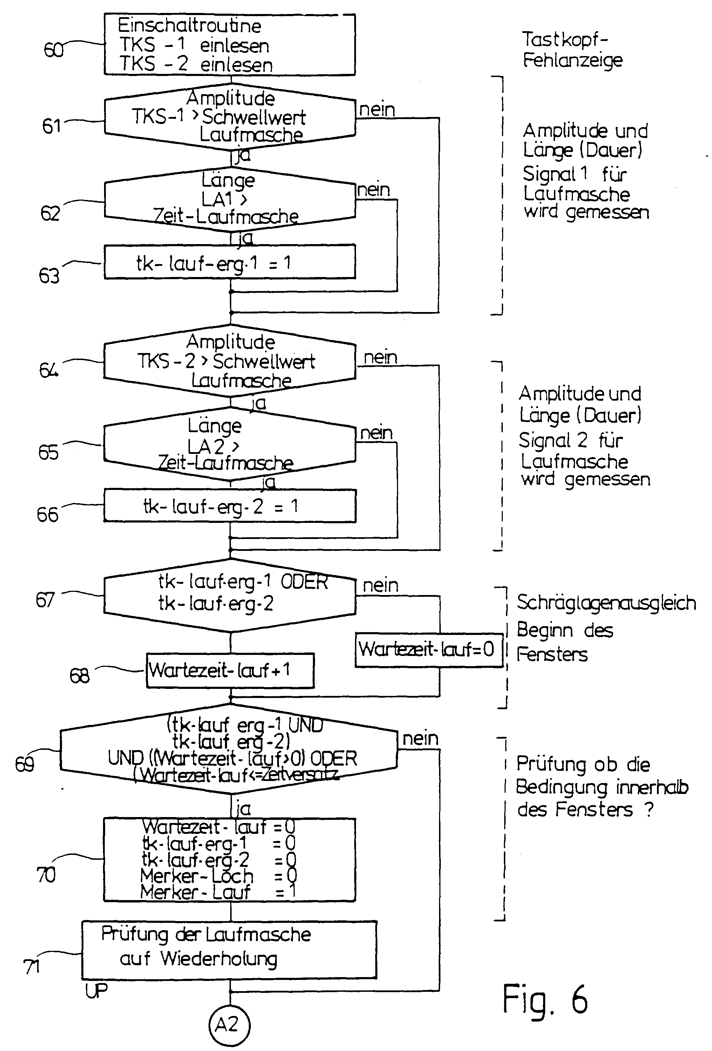

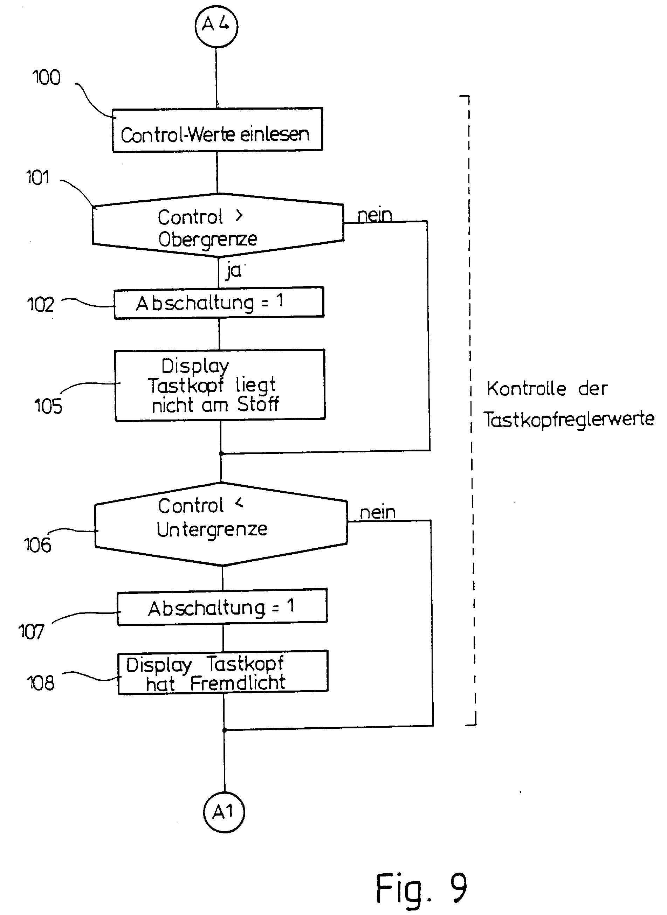

Das Flußdiagramm für ein geeignetes Programm für den Mikroprozessor 47 ist in den Fig. 6 bis 9 veranschaulicht. Nach dem Einschalten durchläuft der Mikroprozessor zunächst eine einmalige Einschaltroutine. In einer internen Initialisierungsphase werden der Programm- bzw. Befehlsfolgezähler auf den Startwert gesetzt. Die Steuer- und Statusregister werden entsprechend den in dem RAM- oder ROM-Speicher des Mikroprozessors 47 vorgegebenen Daten gesetzt etc. Sowie diese Einschaltroutine durchlaufen ist, werden bei 60 die von dem Tastkopf 8 kommenden, über den A/D-Wandler 46 zugeführten Fehlersignale "TKS" eingelesen, die für die Gruppe I mit TKS-1 und für die Gruppe II mit TKS-2 bezeichnet sind.

Bei 61 wird sodann geprüft, ob das Fehlersignal der Gruppe I mit seiner Amplitude den Amplituden-Schwellenwert für eine Laufmasche, d.h. für einen Längsfehler, überschreitet oder nicht. Wenn ja, wird bei 62 festgestellt, ob die Signaldauer oder -länge LA 1 des Signals TKS-1 (der Gruppe I) oberhalb des vorgegebenen zeitlichen Schwellenwerts für Laufmaschen liegt. Führen beide Prüfungen zu einem positiven Ergebnis, so wird dieses bei 63 zwischengespeichert, d.h. "TK-Lauf(masche)-Erg(ebnis)-1" wird auf 1 gesetzt.

Sodann wird bei 64, 65 die gleiche Prüfung für das Fehlersignal TKS-2 der Gruppe II durchgeführt, deren positives Ergebnis gegebenenfalls bei 66 zwischengespeichert wird.

Bei 67 beginnt nunmehr das für die Bewertung der Kriterien zur Unterscheidung der Fehlerarten vorgesehene logische Fenster. Dazu wird zunächst festgestellt, ob die vorhergehenden Prüfungen bei dem Fehlersignal TKS-1 oder -2 zu einem positiven Ergebnis geführt haben und demgemäß TK-Lauf-Erg für die Gruppe I oder die Gruppe II wahr ist oder nicht. Wenn ja, wird bei 68 eine für Laufmaschen gültige Wartezeitzählung um 1 hochgezählt, wenn nein, wird die Wartezeitzählung auf null zurückgesetzt.

An dieser Stelle erfolgt somit der Ausgleich einer etwaigen Schrägstellung einer Laufmasche bezüglich des Abtastfeldes des Tastkopfes 8. Die Ergebnisse der bisherigen Prüfung der Signale TKS-1 und TKS-2 werden somit zunächst getrennt zwischengespeichert und erst anschließend auf die Gemeinsamkeit ihres Auftretens hin bewertet.

Zu diesem Zwecke wird bei 69 untersucht, ob die gespeicherten Ergebnisse TK-Lauf-Erg-1 und TK-Lauf-Erg-2 der UND-Bedingung genügen und ob außerdem als weitere UND-Bedingung die für Laufmaschen gültige Wartezeit (Wartezeit-Lauf) größer 0 oder ≦ einem vorgegebenen Zeitversatz ist. Dieser Zeitversatz ergibt sich aus der speziellen Art des abzutastenden Gestricks. Er entspricht beispielsweise der Durchlaufzeit von drei benachbarten Maschenstäbchen durch das streifenförmige Abtastfeld 22 des Tastkopfes 8.

Ergibt die Prüfung, daß die drei genannten UND-Bedingungen erfüllt sind, so liegt eine Laufmasche vor. Ein Merker "Laufmasche" (Merker-Lauf) wird auf 1 gesetzt, während die übrigen Parameter wieder auf 0 gesetzt werden, was bei 70 geschieht. Im Programmablauf wird daraufhin bei 71 anhand eines Unterprogrammes überprüft, ob der festgestellte Laufmaschenfehler bei der nächsten Maschinenumdrehung wiederkehrt. Wenn ja, kann beispielsweise die Maschinenabstellung 54 ausgelöst werden. Gleichzeitig erfolgt eine Fehleranzeige "Laufmasche" in dem Anzeigefeld 41. Es werden Zähler für die Gesamtfehlerzahl, für die Gesamtzahl der Laufmaschenfehler, für die Zahl der Gesamtfehler oder der Laufmaschenfehler pro Zeiteinheit weitergezählt und so fort. Ein Teil dieses Programmablaufes wird anhand der nachfolgenden Erkennung eines Punktfehlers ("Loch") kurz dargelegt.

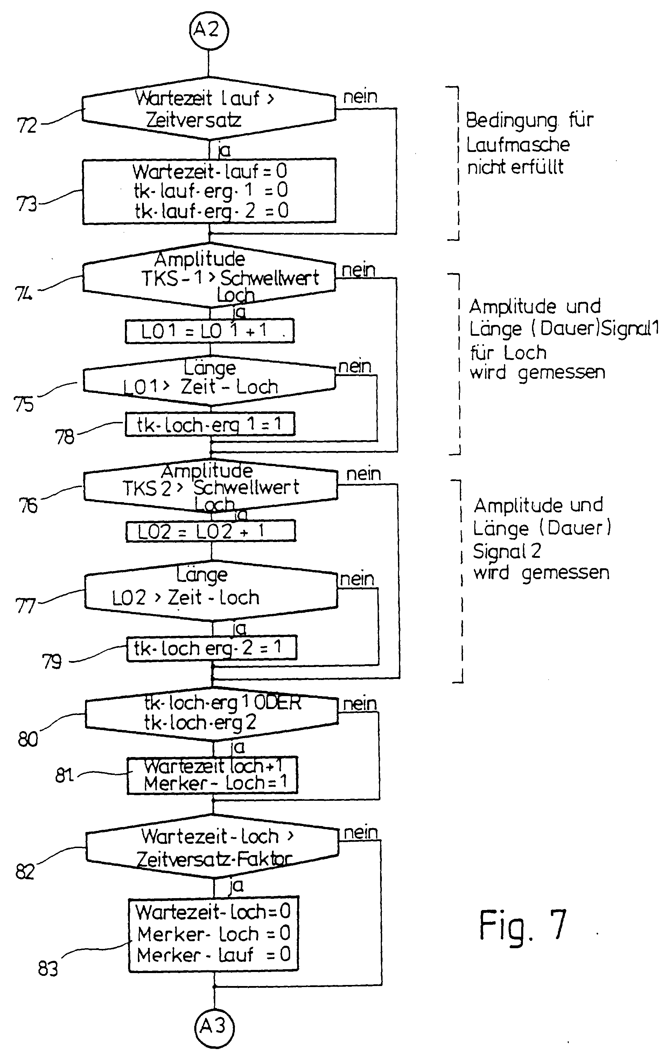

Ist die UND-Bedingung bei 69 nicht erfüllt, so wird bei 72 (Fig. 7) nochmals sicherheitshalber überprüft, ob die Wartezeit "Laufmasche" größer ist als der voreingestellte Zeitversatz. Wenn ja, sind die Bedingungen für das Vorliegen einer Laufmasche endgültig nicht erfüllt. Alle Parameter werden bei 73 auf 0 gesetzt.

Wird aber bei 72 festgestellt, daß die geprüften Signale TKS-1 und TKS-2 einen größeren zeitlichen Abstand aufweisen als dem für Laufmaschen gültigen, voreingestellten (maximalen) Zeitversatz, so beginnt unmittelbar die Überprüfung der beiden Signale daraufhin, ob sie das Vorliegen eines Punktfehlers, d.h. Loches bedeuten.

Zu diesem Zwecke erfolgt bei 74 und 76 eine Prüfung darauf, ob die Amplitude des Signals TKS-1 oder -2 einen für die Locherkennung vorgegebenen Amplituden-Schwellenwert ("Schwellwert-Loch") übersteigt oder nicht, während bei 75, 77 eine Überprüfung dieser beiden Signale daraufhin erfolgt, ob die Signaldauer oder -länge einen vorgegebenen, für die Locherkennung geltenden zeitlichen Schwellenwert überschreitet oder nicht.

Die Ergebnisse tk-Loch-Erg-1 bzw. -2 werden wiederum bei 78, 79 zwischengespeichert.

Anschließend wird bei 80 festgestellt, ob die zwischengespeicherten Ergebnisse der vorhergehenden Prüfungen der logischen ODER-Bedingung genügen oder nicht. Wenn ja, wird bei 81 eine für die Locherkennung gültige Wartezeit hochgezählt, worauf bei 82 untersucht wird, ob die Wartezeit "Loch" größer ist als der für die Laufmaschenerkennung vorgegebene Zeitversatz, entsprechend drei Maschenstäbchen, multipliziert mit einem Faktor überschritten ist oder nicht.

Dieser Faktor bewirkt eine Verbreiterung des Zeitfensters, die verhindert, daß breite Löcher mehrfach gezählt werden. Wird eine Wartezeit "Loch" festgestellt, die größer als der Zeitversatz x dem Faktor ist, so wird die Messung abgebrochen. Die Parameter werden bei 83 auf Null gesetzt.

Ist die Bedingung bei 82 aber nicht erfüllt, d.h. liegen die Signale noch innerhalb des für die Locherkennung geltenden breiteren Zeitfensters, so wird bei 84 nochmals überprüft, ob die gespeicherten Prüfungsergebnisse TK-Loch-Erg-1 und TK-Loch-Erg-2 der logischen UND-Bedingung genügen. Sollte die Antwort "Ja" sein, so liegt doch eine Laufmasche vor, deren Amplituden- und Zeitdauerwert aber oberhalb der entsprechenden, für die Locherkennung gültigen Schwellenwerte liegen. Es wird deshalb bei 85 der Merker "Lauf(masche)" auf 1 gesetzt, während der Merker "Loch" auf Null gesetzt wird.

Genügen die beiden Ergebnisse TK-Loch-Erg-1 und TK-Loch-Erg-2 der logischen UND-Bedingung nicht, so wird bei 86 sicherheitshalber nochmals eine Antivalenzprüfung vorgenommen, bei deren positivem Ausgang der Merker "Loch" bei 87 auf 1 gesetzt wird.

An dieser Stelle des Programms ist nunmehr die Bewertung der von dem Tastkopf 8 gelieferten Fehlersignale abgeschlossen. Der Datenspeicher enthält nunmehr getrennte Angaben darüber, ob ein Punktfehler oder ein Längsfehler, d.h. ein Loch oder eine Laufmasche, vorliegt.

Die Weiterverarbeitung der so gewonnenen Information erfolgt für die Laufmaschen bei 71 und für die Löcher in dem nachfolgend kurz angedeuteten Programmteil,der für die Laufmaschenerkennung in ähnlicher Weise vorgesehen und in 71 enthalten ist. Es genügt deshalb, diesen Programmteil lediglich für die Locherkennung kurz zu schildern:

Anschließend an die vorher erörterten Programmschritte wird bei 88 nochmals überprüft, ob die Wartezeit "Loch" gleich dem eingestellten Zeitversatz x dem vorgegebenen Faktor ist und ob der Merker "Laufmasche" auf Null bzw. der Merker "Loch" auf "1" steht. Ist diese Bedingung erfüllt, so wird bei 89 ein die Gesamtzahl der Löcher angebender Zähler - "Lochzähler" - und ein Einzelzähler, sowie gegebenenfalls ein die Gesamtfehlerzahl angebender Zähler jeweils um 1 hochgezählt. Falls nach dem Auftreten eines Loches die Maschinenabstellung 54 angesteuert werden soll, wurde ein entsprechender Befehl über die Eingabetastatur 42 eingegeben. Es wird deshalb bei 90 geprüft, ob ein solcher Ausschaltbefehl "Loch - aus" vorliegt oder nicht. Wenn ja, wird bei 91 eine Abschaltroutine in Gang gesetzt, die sicherstellt, daß beim Auslaufen der Maschine der Nadelzylinder in einer vorbestimmten Stellung zur Nadeltür zum Stillstand kommt, worauf bei 92 die Abschaltung ausgelöst wird. Außerdem wird von 93 aus das Anzeigefeld 41 angesteuert, das eine Fehleranzeige gibt und gleichzeitig den Bediener auffordert, den Fehler zu quittieren.

Häufig ist es auch erwünscht, zusätzlich noch die pro Zeiteinheit festgestellten Fehler - getrennt nach Punkt- und Längsfehlern - zu kennen, zu registrieren und auf dem Anzeigefeld 41 anzuzeigen.

Dies kann im weiteren Programmablauf bei 94 (für die Löcher) geschehen, Während bei 95 geprüft wird, ob die festgestellte Fehlerzahl ein vorgegebenes Fehlerlimit überschreitet. Wenn ja, wird bei 96 die Abschaltroutine für die Maschinenabstellung 54 ausgelöst. Auf jeden Fall erfolgt bei 97 eine Ansteuerung des Anzeigefeldes 41 zur entsprechenden Fehleranzeige und Aufforderung zur Fehlerquittierung.

Das Programm kann zusätzlich noch die Möglichkeit beinhalten, ein Unterprogramm zur Erstellung eines Display-Protokolls aufzurufen, die Zähler für die Fehler bei Erreichen des Endes des Warenballens wieder zurückzustellen, so daß die Fehlerzahl pro Warenballen angegeben werden kann, eine Auslaufroutine und eine Einschaltroutine für die Wiederingangsetzung der Maschine nach einem aus anderen Gründen erfolgenden Stillsetzen auszulösen etc. Diese Programmschritte sind im einzelnen nicht weiter veranschaulicht.

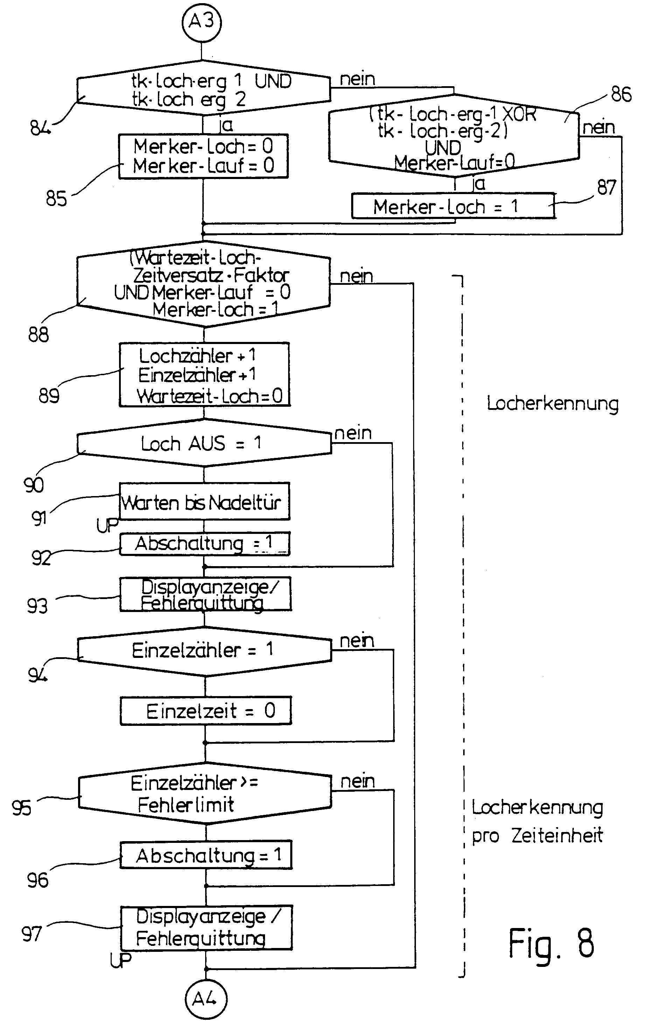

In Fig. 8 ist lediglich noch kurz erläutert, wie die über die Kontrolleitung 29 von dem Tastkopf 8 zugeführten Kontrollsignale für die Helligkeitswerte der Beleuchtung der abzutastenden Textilware verarbeitet werden. Diese Kontrollwerte werden bei 100 eingelesen. Darauf wird bei 101 überprüft, ob sie einen vorgegebenen oberen Grenzwert überschreiten. Wenn ja, erfolgt bei 102 die Ansteuerung der Maschinenabstellung 54, während gleichzeitig von 105 aus das Anzeigefeld 41 mit einer entsprechenden Information versorgt wird, so daß es die wahrscheinliche Fehlerursache, nämlich daß der Tastkopf nicht am Stoff anliegt, anzeigt.

Bei 106 erfolgt die entsprechende Prüfung bezüglich des unteren Grenzwerts, die bei positivem Ergebnis bei 107 ebenfalls zur Maschinenabstellung führt, während bei 108 das Anzeigefeld 41 derart angesteuert wird, daß es die wahrscheinliche Fehlerursache, nämlich daß der Tastkopf Fremdlicht hat, anzeigt.

Der Programmablauf ist damit beendet; das Programm kehrt wieder an den Anfang nach der Einschaltroutine zurück.

In dem Programm können schließlich noch Programmabschnitte enthalten sein, die sicherstellen, daß eine über die Eingabetastatur 42 erfolgende Eingabe von Befehlen, Parametern und dergleichen lediglich bei Maschinenstillstand erfolgen kann, um auf diese Weise zu vermeiden, daß durch Fehlbedienungen des Steuergerätes 34 Fehlabschaltungen der Maschine im Betrieb auftreten.

Das neue Verfahren wurde im Vorstehenden anhand einer Rundstrickmaschine mit umlaufendem Nadelzylinder geschildert. Grundsätzlich ist es natürlich auch für Rundwirkmaschinen sowie für Rundstrickmaschinen mit stillstehendem Nadelzylinder (und dann umlaufendem Abtastkopf 8) sowie für Webmaschinen geeignet. Es muß nur sichergestellt sein, daß eine Relativbewegung zwischen dem Abtastfeld 22 des Abtastkopfes und der Oberfläche der abzutastenden Textilware gegeben ist und daß diese Abtastbewegung mit einer vorgegebenen, vorzugsweise konstanten Geschwindigkeit erfolgt.

## Patentansprüche

1. Verfahren zum Feststellen von Fehlern in einer textilen Warenbahn (5),
bei dem die Warenbahn (5) in wenigstens einem streifenförmigen Bereich auf elektro-optischem Wege mit Abtastmitteln (8) abgetastet wird, die für den Zustand der Warenbahn (5) an mehreren innerhalb des streifenförmigen Bereiches (22) liegenden Abtaststellen kennzeichnende elektrische Abtastsignale abgeben, welche im Sinne der Erkennung von Fehlern in der Warenbahn (5) derart ausgewertet werden,
daß eine Unterscheidung zwischen verschiedenen Fehlerarten getroffen wird,
daß für so festgestellte Fehlerarten getrennte Ausgangssignale zur Ansteuerung weiterer Einrichtungen (34, 41, 54) erzeugt werden,
wobei während der Abtastung eine quer zu dem streifenförmigen Bereich gerichtete Relativbewegung vorbestimmter Geschwindigkeit zwischen der Warenbahn (5) und den Abtastmitteln (8) aufrechterhalten wird, bei der abzutastende Bereiche der Warenbahn (5) abgetastet werden,
daß die für die einzelnen Abtaststellen (22) kennzeichnenden Abtastsignale jeweils gruppenweise zu zumindest zwei gruppenspezifischen Fehlersignalen zusammengefaßt werden, die getrennt weiterverarbeitet und ausgewertet werden,
daß bei dieser Auswertung der Amplitudenwert, die Zeitdauer und das einzelne oder gemeinsame Auftreten von Fehlersignalen der einzelnen Gruppen gemessen bzw. festgestellt werden, dadurch gekennzeichnet,
daß daraus eine Fehlerbewertung in der Weise vorgenommen wird, daß:
a) der Fehler als Punktfehler erkannt wird, wenn bei wenigstens einem mit seinem Amplitudenwert von einem vorgegebenen ersten Amplituden-Schwellenwert abweichenden Fehlersignal die zeitliche Signaldauer einen vorgegebenen ersten zeitlichen Schwellenwert um zumindest einen vorbestimmten längeren Zeitraum überschreitet, ohne daß mehrere Fehlersignale gemeinsam innerhalb eines Meßzeitraums auftreten,
b) der Fehler als Längsfehler erkannt wird, wenn bei wenigstens zwei mit ihren Amplitudenwerten von einem vorgegebenen zweiten Amplituden-Schwellenwert abweichenden Fehlersignalen die zeitliche Signaldauer einen vorgegebenen zweiten zeitlichen Schwellenwert um zumindest einen vorbestimmten kürzeren Zeitraum überschreitet und zumindest zwei Fehlersignale innerhalb eines Meßzeitraumes gemeinsam auftreten und sonst
c) kein Fehler erkannt wird.

2. Verfahren nach Anspruch 1, dadurch gekennzeichnet, daß die textile Warenbahn (5) aus einer auf einer Rundstrick- oder -wirkmaschine hergestellten schlauchförmigen Maschenware besteht.

3. Verfahren nach Anspruch 1, dadurch gekennzeichnet, daß sich die verschiedenen Fehlerarten formen- und/oder größenmäßig voneinander unterscheiden.

4. Verfahren nach Anspruch 1, dadurch gekennzeichnet, daß die weiteren durch Ausgangssignale angesteuerten Einrichtungen (34, 41, 54) Steuer- (34) und/oder Anzeige- (41) und/oder Schalteinrichtungen (54) umfassen.

5. Verfahren nach Anspruch 1, dadurch gekennzeichnet, daß die abzutastenden Bereiche der Warenbahn (5) mehrfach abgetastet werden.

6. Verfahren nach Anspruch 1, dadurch gekennzeichnet, daß bei der Fehlerbewertung zusätzlich festgestellt wird, ob eine periodisch auftretende Signalwiederholung, bspw. bei zumindest einer Maschinenumdrehung im Falle einer Rundstrickmaschine, vorliegt und daß eine festgestellte periodisch auftretende Signalwiederholung als zusätzliches Kriterium für das Erkennen eines Fehlers als Längsfehler benutzt wird.

7. Verfahren nach einem der vorhergehenden Ansprüche, dadurch gekennzeichnet, daß die Fehlersignale jeweils einzeln zumindest über einen vorbestimmten Zeitraum zwischengespeichert werden und erst dann auf Gemeinsamkeit ihres Auftretens hin untersucht werden.

8. Verfahren nach einem der vorhergehenden Ansprüche, dadurch gekennzeichnet, daß der erste und der zweite Amplituden-Schwellenwert gleich sind.

9. Verfahren nach einem der Ansprüche 1 bis 7, dadurch gekennzeichnet, daß der erste und der zweite Amplituden-Schwellenwert voneinander verschieden sind.

10. Verfahren nach einem der vorhergehenden Ansprüche, dadurch gekennzeichnet, daß der erste und der zweite zeitliche Schwellenwert gleich sind.

11. Verfahren nach einem der Ansprüche 1 bis 9, dadurch gekennzeichnet, daß der erste und der zweite zeitliche Schwellenwert voneinander verschieden sind.

12. Verfahren nach einem der vorhergehenden Ansprüche, dadurch gekennzeichnet, daß die Meßzeiträume für das Erkennen von Punkt- und Längsfehlern verschieden lang sind.

13. Verfahren nach einem der vorhergehenden Ansprüche, dadurch gekennzeichnet, daß der Meßzeitraum für Längs fehler beim Abtasten von Maschenware etwa der Durchlaufzeit von drei Maschenstäbchen durch den streifenförmigen Abtastbereich (22) entspricht.

14. Verfahren nach einem der vorhergehenden Ansprüche, dadurch gekennzeichnet, daß aus den Abtastsignalen ein gewichtetes Summensignal gebildet wird und daß die elektro-optischen Abtastmittel (8) in Abhängigkeit von diesem Summensignal auf konstante vorgegebene optische Abtastbedingungen selbsttätig eingeregelt werden.

15. Verfahren nach Anspruch 14, dadurch gekennzeichnet, daß das gewichtete Summensignal daraufhin überwacht wird, daß es innerhalb vorbestimmter Grenzwerte liegt und daß bei Über- bzw. Unterschreiten eines dieser Grenzwerte ein Steuersignal abgegeben wird.

16. Verfahren nach einem der vorhergehenden Ansprüche, dadurch gekennzeichnet, daß die Abtaststellen geometrisch in einer Reihe liegend angeordnet sind.

17. Verfahren nach einem der vorhergehenden Ansprüche, dadurch gekennzeichnet, daß aus der Auswertung der Fehlersignale gewonnene Informationen über die erkannten Fehler nach der Fehlerart getrennt in eigenen Datenspeichern (49) gespeichert und aus diesen Speichern (49) zur Anzeige oder Weiterverarbeitung abgerufen werden.

18. Verfahren nach einem der vorhergehenden Ansprüche, dadurch gekennzeichnet, daß Informationen über die erkannten Fehler nach Fehlerarten getrennt über eine serielle Datenschnittstelle (43) an externe Datenerfassungsgeräte (44) gegeben werden.

19. Verfahren nach Anspruch 18, dadurch gekennzeichnet, daß über die serielle Datenschnittstelle (43) Fehlerparameter programmiert werden.

## Claims

1. Method for detecting flaws in a textile web (5), in which the textile web (5) is electro-optically scanned in at least one strip-form zone by means of sensing elements (8), which emit electrical sensing signals identifying the condition of the textile web (5) at several sensing points lying within the strip-form zone (22), and said sensing signals are evaluated with respect to the detection of flaws in the textile web (5) in such a way
that a distinction is made between different types of flaw,
that separate output signals for the types of flaw thus detected are generated to actuate further systems (34, 41, 54),
in which case during scanning a relative movement of predetermined speed directed transversely to the strip-form zone is maintained between the textile web (5) and the sensing elements (8), in the course of which those regions of the textile web (5) to be sensed are scanned,
that the sensing signals identifying the individual sensing points (22) are respectively combined in groups into at least two group-specific flaw signals which are processed and evaluated separately,
that in this evalution the amplitude value, the time duration and the individual or joint occurrence of flaw signals of the individual groups are measured or detected, characterised in that
a flaw analysis is conducted so that:
a) a spot type flaw is identified, if the time duration of the signal exceeds a predetermined first time threshold value by at least one predetermined longer period of time in the case of at least one flaw signal differing in amplitude value from a predetermined first amplitude threshold value without several flaw signals occurring together within a measuring period,
b) a long type flaw is recognised if the time duration of the signal exceeds a predetermined second time threshold value by at least one predetermined shorter period of time in the case of at least two flaw signals differing in amplitude value from a predetermined second amplitude threshold value, and at least two flaw signals occur within a measuring period, and otherwise
c) no flaw is recognized.

2. Method according to Claim 1, characterised in that the textile web (5) consists of a tubular knitted fabric produced on a circular knitting machine or circular warp knitting machine.

3. Method according to Claim 1, characterised in that the various types of flaw differ from one another in form and/or in size.

4. Method according to Claim 1, characterised in that the further systems (34, 41, 54) controlled by output signals comprise control (34) and/or display (41) and/or switching means (54).

5. Method according to Claim 1, characterised in that the zones of the textile web (5) to be sensed are scanned several times.

6. Method according to Claim 1, characterised in that during the flaw analysis it is additionally established whether a periodically occurring signal repetition occurs, e.g. in at least one revolution in the case of a circular knitting machine; and that an established periodically occurring signal repetition is used as an additional criterion for identification of a flaw as a long type flaw.

7. Method according to one of the preceding claims, characterised in that the flaw signals are each held separately in an interim store at least over a predetermined period and are only investigated with respect to their combined occurrence.

8. Method according to one of the preceding claims, characterised in that the first and second amplitude threshold values are equal.

9. Method according to one of Claims 1 to 7, characterised in that the first and second amplitude threshold values differ from one another.

10. Method according to one of the preceding claims, characterised in that the first and second time threshold values are equal.

11. Method according to one of Claims 1 to 9, characterised in that the first and second time threshold values differ from one another.

12. Method according to one of the preceding claims, characterised in that the measuring periods for identification of spot and long type flaws differ in length.

13. Method according to one of the preceding claims, characterised in that the measuring period for long type flaws during scanning of knitted fabric corresponds approximately to the time required for three wales of stitches to pass through the strip-form sensing zone (22).

14. Method according to one of the preceding claims, characterised in that a weighted cumulative signal is formed from the sensing signals, and that the electro-optical sensing elements (8) are automatically adjusted to constant prescribed optical sensing conditions as a function of this cumulative signal.

15. Method according to Claim 14, characterised in that the weighted cumulative signal is monitored so that it lies within predetermined tolerance limits and that a control signal is emitted when it falls above or below these limit values.

16. Method according to one of the preceding claims, characterised in that the sensing points are arranged geometrically in a row.

17. Method according to one of the preceding claims, characterised in that information on the identified flaws obtained from evaluation of the flaw signals is separated according to the type of flaw and stored in separate data memories (49), and is recalled from these memories (49) for display or further processing.

18. Method according to one of the preceding claims, characterised in that information on identified flaws is separated according to the type of flaw and passed to external data recording devices (44) via a series data interface (43).

19. Method according to Claim 18, characterised in that fault parameters are programmed via the series data interface (43).

## Revendications

1. Procédé pour la détection de défauts dans un produit textile (5) en nappe,
dans lequel on palpe par voie photo-électrique la nappe textile (5) dans au moins une zone en forme de bande à l'aide de moyens de balayage (8) qui délivrent, pour l'état de la nappe textile (5) en différents points de palpage à l'intérieur de la zone (22) en forme de bande, des signaux électriques de palpage caractéristiques qui, aux fins de détecter des défauts dans la nappe textile (5), sont exploités de telle sorte
qu'une distinction soit opérée entre différents types de défauts,
que des signaux de sortie distincts destinés à piloter d'autres dispositifs (34, 41, 54) sont générés pour les types de défauts ainsi constatés,
un déplacement relatif entre la nappe textile (5) et les moyens de palpage (8), transversalement à la zone en forme de bande, avec une vitesse prédéterminée, étant maintenu, déplacement au cours duquel des zones à contrôler de la nappe textile (5) sont palpées,
que les signaux de palpage caractéristiques pour les différents points de palpage (22) sont regroupés par groupes pour former au moins deux signaux de défaut spécifiques à un groupe qui sont traités et exploités séparément,
que la valeur de l'amplitude, la durée et l'apparition isolée ou groupée de signaux de défaut des différents groupes sont mesurées ou constatée lors de cette exploitation,
caractérisé par le fait qu'à partir de ces éléments, on exploite le défaut de la manière suivante:
a) le défaut est reconnu en tant que défaut ponctuel lorsque pour au moins un signal de défaut dont l'amplitude s'écarte d'un premier seuil d'amplitude déterminé, la durée dans le temps du signal est supérieure d'au moins un intervalle de temps long prédéterminé à un premier seuil de temps sans que plusieurs signaux de défaut apparaissent simultanément dans un intervalle de mesure,
b) le défaut est reconnu en tant que défaut longitudinal, lorsque pour au moins deux signaux de défaut dont l'amplitude s'écarte d'un deuxième seuil d'amplitude déterminé, la durée dans le temps du signal est supérieure d'au moins un intervalle de temps court prédéterminé à un deuxième seuil de temps et qu'au moins deux signaux de défaut apparaissent simultanément dans un intervalle de mesure, et sinon
c) aucun défaut n'est reconnu.

2. Procédé selon la revendication 1, caractérisé par le fait que la nappe textile (5) est formée d'un produit tubulaire à mailles fabriqué sur une machine à tricoter ou un sur métier à tricoter.

3. Procédé selon la revendication 1, caractérisé par le fait que les différents types de défauts différent les uns des autres au niveau de leur forme et/ou de leur dimension.

4. Procédé selon la revendication 1, caractérisé par le fait que les autres dispositifs (34, 41, 54) pilotés par les signaux de sortie comprennent des dispositifs de commande (34) et/ou d'affichage (41) et/ou de commutation (54).

5. Procédé selon la revendication 1, caractérisé par le fait que les zone à palper de la nappe textile (5) sont palpées plusieurs fois.

6. Procédé selon la revendication 1, caractérisé par le fait que lors de l'exploitation des défauts on détermine si une répétition du signal se produit périodiquement, par exemple sur au moins un tour de la machine dans le cas d'une machine à tricoter en rond et que l'on utilise une répétition périodique constatée du signal comme critère supplémentaire d'interprétation d'un défaut comme défaut longitudinal

7. Procédé selon une des revendications précédentes, caractérisé par le fait que les signaux d'erreur sont stockés séparément chaque fois de manière temporaire sur une période prédéterminée et que l'on recherche ensuite leur apparition simultanée.

8. Procédé selon l'une des revendications précédentes, caractérisé par le fait que les premier et deuxième seuils d'amplitude sont égaux.

9. Procédé selon l'une des revendications 1 à 7, caractérisé par le fait que les premier et deuxième seuils d'amplitude sont différents.

10. Procédé selon l'une des revendications précédentes, caractérisé par le fait que les premier et deuxième seuils de temps sont égaux.

11. Procédé selon l'une des revendications 1 à 9, caractérisé par le fait que les premier et le deuxième seuils de temps sont différents.

12. Procédé selon l'une des revendications précédentes, caractérisé par le fait que les intervalles de temps de mesure pour la détection de défauts ponctuels et allongés ont des longueurs différentes.

13. Procédé selon l'une des revendications précédentes caractérisé par le fait que l'intervalle de temps de mesure pour des défauts allongés lors du palpage de produits à mailles correspond sensiblement au temps de passage de trois colonnes de mailles dans la zone de palpage (22) en forme de bande.

14. Procédé selon l'une des revendications précédentes, caractérisé par le fait que l'on forme à partir des signaux de palpage un signal global pondéré et par le fait que les moyens de palpage (8) électro-optiques sont réglés de manière automatique en fonction de ce signal global sur des conditions de palpage optique constantes prédéterminées.

15. Procédé selon la revendication 14, caractérisé par le fait que l'on surveille le signal global pondéré, pour que celui-ci soit situé entre des seuils prédéterminés et que, en cas de dépassement vers le haut ou vers le bas de l'un de ces seuils, un signal de commande soit délivré.

16. Procédé selon l'une des revendications précédentes caractérisé par le fait que les points de palpage sont disposés géométriquement sur une ligne.

17. Procédé selon l'une des revendications précédentes caractérisé par le fait que l'on stocke séparément en fonction du type de défaut, dans des mémoires de données (49) propres, des informations sur les défauts détectés, obtenues par l'exploitation des signaux de défauts, et que l'on appelle ces informations dans les mémoires (49) à des fins d'affichage ou de traitement ultérieur.

18. Procédé selon l'une des revendications précédentes caractérisé par le fait que l'on transmet des informations sur les défauts détectés, séparément par type de défaut à des appareils (44) externes de détection de données, par l'intermédiaire d'une interface série de données (43).

19. Procédé selon la revendication 18, caractérisé par le fait que des paramètres de défaut sont programmés par l'intermédiaire de l'interface série de données (43).
